Europäisches Patentamt

European Patent Office

Office européen des brevets

(11) Publication number: **0 187 414**
**B1**

(12) EUROPEAN PATENT SPECIFICATION

(45) Date of publication of patent specification: **31.05.89**

(21) Application number: **85202021.3**

(22) Date of filing: **04.12.85**

(60) Divisional application 88201806 filed on 24.08.88.

(51) Int. Cl.⁴: **B 65 B 9/15,** B 65 B 25/06, A 22 C 7/00

(54) **Apparatus and method for packing and processing a meat product in foil.**

(30) Priority: **07.12.84 NL 8403736**
**27.02.85 NL 8500550**

(43) Date of publication of application:
**16.07.86 Bulletin 86/29**

(45) Publication of the grant of the patent:
**31.05.89 Bulletin 89/22**

(84) Designated Contracting States:
**AT BE CH DE FR GB IT LI LU NL SE**

(56) References cited:
**FR-A-1 267 073**
**FR-A-2 493 104**
**FR-A-2 493 804**
**FR-A-2 508 279**
**NL-A-7 115 217**
**US-A-2 084 806**
**US-A-4 155 212**

(73) Proprietor: **LANGEN RESEARCH B.V.**
**Beversestraat 4**
**NL-5431 SH Cuyk (NL)**

(72) Inventor: **Langen, Johannes Christina**
**56 Jan van Cuykstraat**
**NL-5431 GC Cuyk (NL)**
Inventor: **Langen, Christianus Petrus**
**11, Zandkampen**
**NL-5431 BB Cuyk (NL)**

(74) Representative: **Hoorweg, Petrus Nicolaas et al**
**OCTROOIBUREAU ARNOLD & SIEDSMA**
**Sweelinckplein 1**
**NL-2517 GK The Hague (NL)**

## Description

The invention concerns an apparatus for packing a meat product, such as ham, in foil, use being made of a can-shaped mould having a wall- and bottom section for accommodating a bag-shaped foil, such that the collarside of the bag-shaped foil is protruding from said wall section.

It is usual to pack pieces of meat after pretreatment, in a tin, and to process the meat further in the tin, for example by warming up or heating it to a particular temperature such as pasteurization temperature, by which process the meat achieves its final condition. The meat product in the tin is then ready for transport, storage, sale and consumption.

The disadvantages of packing the meat in tins are the high cost, and the weight, involved. The weight, in particular is disadvantageous during transport and storage.

In another method, as disclosed in FR—A—2.508.279, a number of pieces of meat, previously packed in a foil, are deposited in a mould, after which the meat is cooked in the mould in order to obtain the desired product like ham. The mould serves here as a support for obtaining the correct shape.

The invention aims to provide a method and apparatus by use of which the mould can be lined with foil first and filled with pieces of meat afterwards, whereupon the bag-shaped foil can be sealed air-tight; and this in such a way that the foil remains free of fat or meat particles at the places where the seal is made, in order to realize an absolutely air-tight seal.

The apparatus according to the invention is distinguished by:

an elongate first support member for supporting the innerside of the bag and the mould, and a first means, displaceable in radial and axial relationship to said elongate support member for turning-down the collar of the bag around the top edge of the wall section;

a second horizontally extending support member for supporting the bottom section of the mould containing the bag-shaped foil filled with meat product, and a second means, displaceable perpendicular to the second support member for turning-up the collar of the bag;

a third horizontally extending support member for supporting the bottom section of the mould with the filled bag-shaped foil, equipped with a sealing appliance for sealing the collar.

In order to let the turning-down and returning of the collar of the packing foil occur without the formation of creases, it is preferable to form the means for turning-down and/or returning the collar by two or more blades displaceable along the outer wall of the mould.

The turning-down blades are hereby preferably supported pivotably on an axis transverse to the displacement direction, in order first to stretch the collar before turning it down.

The returning blades are preferably formed as hooks, the hook length corresponding at least to the height of the collar of the bag-shaped foil. The aim of this latter feature is to grasp the collar approximately at the position of the edge of the mould, so that the turning-down or returning begins immediately at the edge of the mould.

To provide a large packaging capacity, the second support member is made in the form of a turntable which is mounted in a conveyor track, the returning blades being set up in groups around the turntable.

If the mould used is polygonal, there are, according to the invention, as many turning-down (and returning) blades needed as there are corners. By preference, the turning-down and returning means are so arranged that they act at the corners of the mould which is placed in the apparatus, an arrangement which, in trials, caused the least puckering of the collar.

According to the invention, the third support member is formed as a vacuum chamber which can be closed with a door, and in which the sealing means are incorporated. These latter are preferably formed as a horizontally extensive table at the height of the collar, and a reciprocably moveable pressing punch, a folding member being fitted in the vacuum chamber for holding the collar flat over the horizontal table.

Finally the method, comprising the following steps:

—filling an impermeable releasable lining, with pieces of meat V;

—evacuation and air-tight sealing of the lining;

—heating the meat for a predetermined length of time, with simultaneous exertion of a pressure on the closed lining in the mould;

—taking the meat product, ready and packed in the air-tight lining, out of the mould, is distinguished according to the invention, in that:

—prior to the filling of the lining said lining is placed in a mould,

—and the collar section of the lining protruding said mould is turned over the edge of the mould,

—and finally said collar section is turned back before the sealing step.

In trials, it has appeared that the meat product, ready and packed in the lining, takes on exactly the shape of the mould, without any externally visible air inclusions etc. This improves the aesthetic appearance of the meat product, with the consequence that transparent linings, for example of plastic, can be used. This latter is preferable, because the purchaser can immediately perceive the quality of the meat.

The invention will be further explained in the description of the drawings, below.

In the drawings:

Figure 1 shows a side view of a part of the apparatus provided with the first support member,

Figure 2 shows a standing longitudinal section of part of the apparatus of Figure 1, indicated by arrow II;

Figure 3 shows a section corresponding to Figure 2 of that part of the apparatus according to the line III—III in Figure 4, however with a different position of the turning-down means;

Figure 4 shows an upright transverse section of the apparatus of Figure 2;

Figures 5a to 5e inclusive show a side view of the apparatus of Figure 2 in various stages of usage;

Figures 6 and 7 show upright front and side views, respectively, of part of the apparatus, provided with the second support member in the form of a turntable:

Figure 8 shows a top view of the apparatus of Figure 6:

Figures 9a to 9e inclusive show the returning means applied in the apparatus according to Figure 6, in various stages of usage;

Figures 10 and 11 show a front and side-elevation respectively of a part of the apparatus provided with the third support member, made as a vacuum chest;

Figure 12 shows, on an enlarged scale, a view of the apparatus corresponding to Figure 10;

Figures 13 and 14 show a standing section according to line XIII—XIII in Figure 12 through the sealing means, in two respective positions thereof.

Figures 15a to 15f inclusive show various phases of the method according to the invention;

Figure 16 shows a perspective bottom view of a mould suitable for the method of Figure 15, and also a perspective top view of the cover-section which can be applied therein;

Figures 17a and 17b each show a perspective top view of one of two alternative embodiments of cover-sections;

Figure 18 shows a perspective side view of a holder for moulds from Figure 16;

Figure 19 shows a side view of part of the holder from Figure 18.

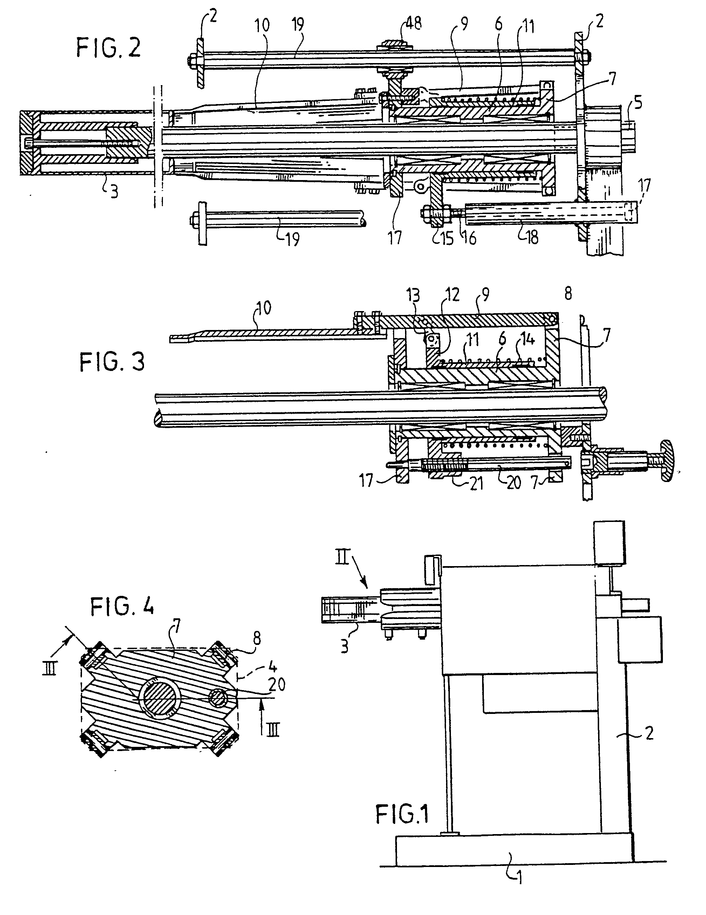

Figure 1 shows the first part of the apparatus, which consists of a base 1 upon which a frame 2 is mounted, in which box-shaped frame the support member 3 is placed, the support member partially projecting out of the frame 2. The support organ 3 serves for accommodation of a bag-shaped foil, and subsequently for a mould which is pushed thereover. The cross-section of the left-hand part of the support member 3 therefore corresponds to that of the mould to be placed upon it, here understood as a rectangular mould 4, which is indicated by dashed line 4 in Figure 4. The mould is described in detail herebelow.

The support member 3 is further embodied with a central spindle 5, which is fastened in the frame 2. Around spindle 5 there is mounted a slidable carriage 6, which is provided at one end with a standing flange 7 of rectangular shape (see Figure 4). Flange 7 is made with a hinge pin 8 at each corner, about which an elongate arm 9 can be swivelled. Arm 9 is extended at the end remote from the hinge pin 8 by a blade 10, whose function will be further explained below.

On the outside of carriage 6 a sleeve 11 is fitted, the sleeve also being provided with a radially outward projecting flange 12, in which a hinge arm 13 is pivotably journalled. The other end of hinge arm 13 is rotatably attached to arm 9.

Between flange 12 and flange 7 of slide 6, a compression spring 14 is fitted.

Flange 12 is at one side also provided with a projecting arm 15, to which there is fastened the rod 16 of a piston 17 in a cylinder 18. The cylinder 18 is fixed to the frame 2.

Slide 6 is provided, opposite flange 7, with a second flange 17 mounted thereon, flange 17 being made with plain bearings 48 which are slidable along slide rods 19, which are mounted in frame 2 parallel to spindle 5.

Between flange 17 and flange 7 there is a dowel 20 fitted, along which a bush 21 of flange 12 is slidable, for the purpose of guiding the sleeve 11.

The length of arm 9 with the blade 10 is such that in the position according to Figure 2, the free end of the blade 10 rests against the inward facing end surface of support member 3 (see Figure 2). The extremity of the blade is bent inwards to a small extent, in order to ensure a smooth passage of the foil thereover.

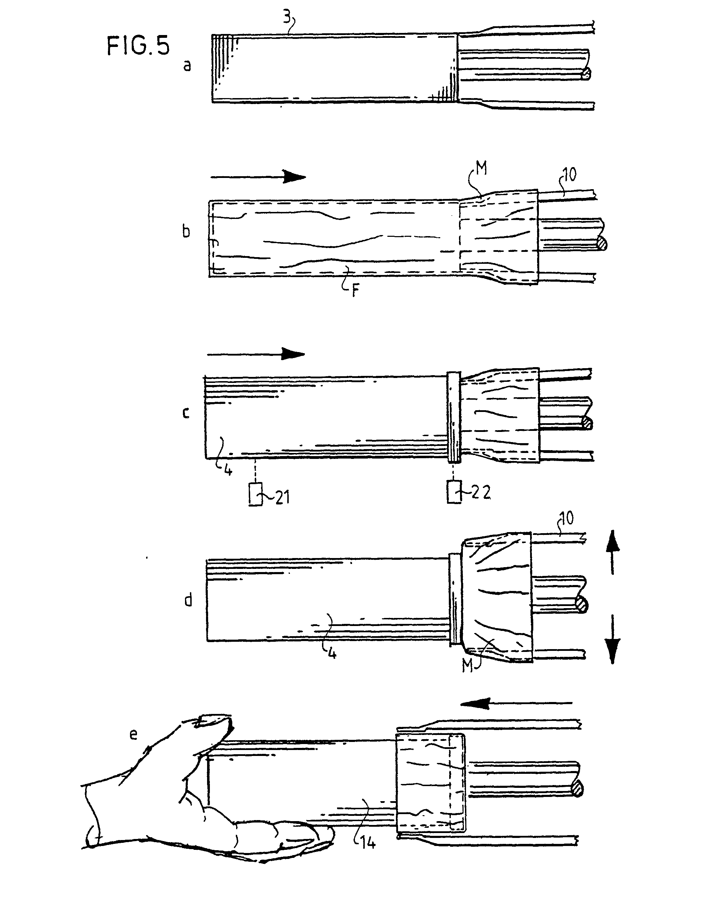

The operation of the apparatus according to Figures 1 to 4 inclusive is explained with reference to Figures 5a to 5e inclusive.

A foil F, which is made with an already attached collar M, is slid over support member 3. The length of foil F and collar M is such that this collar can be entirely slid over the blades 10 (see Figure 5b).

The mould 4 is then fitted over the foil F (see Figure 5c), whereby sensing members 21 and 22 detect the presence, and the final position, respectively, of mould 4, and subsequently energize cylinder 18. On actuation of cylinder 18, arm 15 of sleeve 11 is first slid leftwards in Figures 2 and 3, whereby hinge arms 13 press blades 10 outwards, because slide 6 initially remains stationary. As soon as flange 12 strikes flange 7, further pushing of piston rod 16 out of cylinder 18 results in slide 6 also moving to the left. The outward directed movement of blades 10 is shown in Figure 5d. On further leftward movement of blades 10, which are fastened to slide 6, collar M is folded precisely over the edge of mould 4, without occurrence of puckering. This is effectuated by the above described widening of the collar M close to the end edge of mould 4, before beginning folding over of the collar.

The mould 4 with the turned-down collar can then be taken off support member 3 and brought to a filling station, which operation is indicated schematically by the hand in Figure 5e. Obviously, this operation can be carried out entirely mechanically. The filling of the mould with the foil fitted therein and the folded-down collar falls outside the scope of the present invention, and is not further shown. Every suitable filling machine can be used for this, and it will be clear to the reader that the mould can easily be mechanically filled with pieces of meat without soiling the folded-down collar.

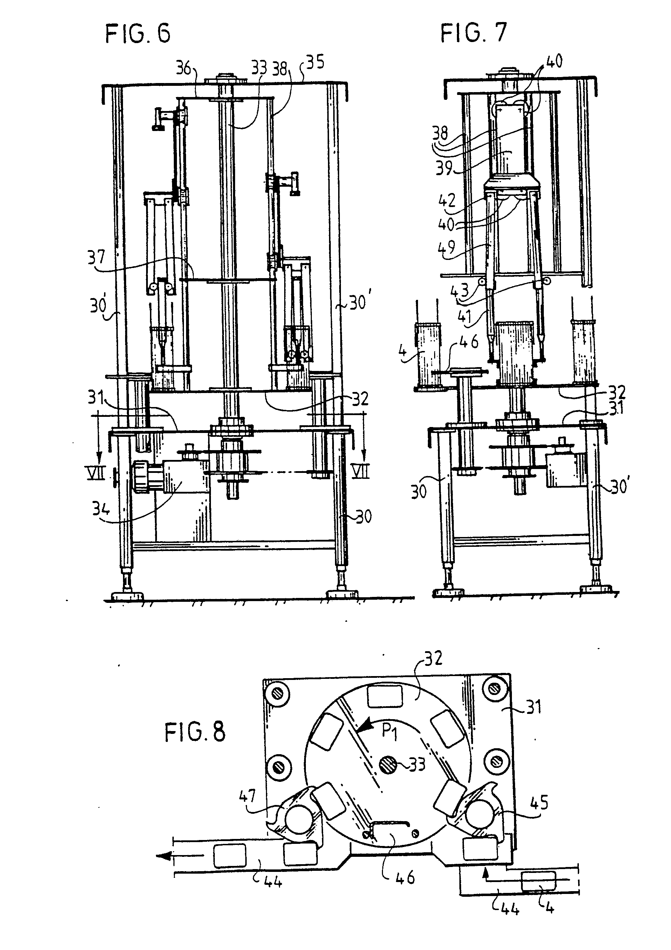

The filled mould is then brought to a second support member of the apparatus, which is here embodied as a table which is rotatable around a vertical spindle, shown in Figures 6 to 9 inclusive.

In the drawings numeral 30 indicates the frame, which consists of four columns, joined at their top ends by a rectangular table 31 (see Figure 8.) In this rectangular table there is mounted a turntable 32, which is journalled on a vertical spindle 33. The driving of table 32 is carried out by a motor and transmission unit 34 mounted in the frame 30. The driving unit can be made in any arbitrary way and therefore needs no further description.

The two rear columns 30' are extended above table 31, and at their upper ends a connecting plate is fitted for accommodating the upper end of spindle 33. Around the top part of spindle 33 there are two supporting plates 36 and 37 fitted, one at a distance above the other, between which pairs of guiding bars 38 are mounted. Between the guiding bars there is a carriage 39, with wheels 40, rollable in a vertical direction, at each of its four corners. The carriage bears on its underside arms 49, each of which is extended by a blade 41, which can reach almost to the turntable 32. The arms are suspended pivotably at 42 from the underside of carriage 39, and during upward or downward vertical movement are led guide rollers 43. The arrangement is such that, on descending movement, the blades 41 spread away from one another, so that the lower ends amply clear the upper edge of a mould 4 which is situated on turntable 32, and come to rest against the outer wall of mould 4 at some distance beneath the upper edge thereof. On an ascending movement, the blades 41 remain in contact with the outer wall of mould 4, and come into place under the folded-down collar of the foil.

The rising and descending movement of carriage 39 along guide bars 38 can also take place in any arbitrary way, and is not further described.

The turntable 32 forms part of a conveyor track 44, upon which the filled moulds are delivered from the right in Figure 8, and are brought into a place 46 on the turntable by a rotating transport mechanism 45, and, after the moulds have passed through the five stations of turntable 32 illustrated in Figure 8, in the direction of arrow P1, they are replaced on the conveyor track 44 by a rotating transport organ 47.

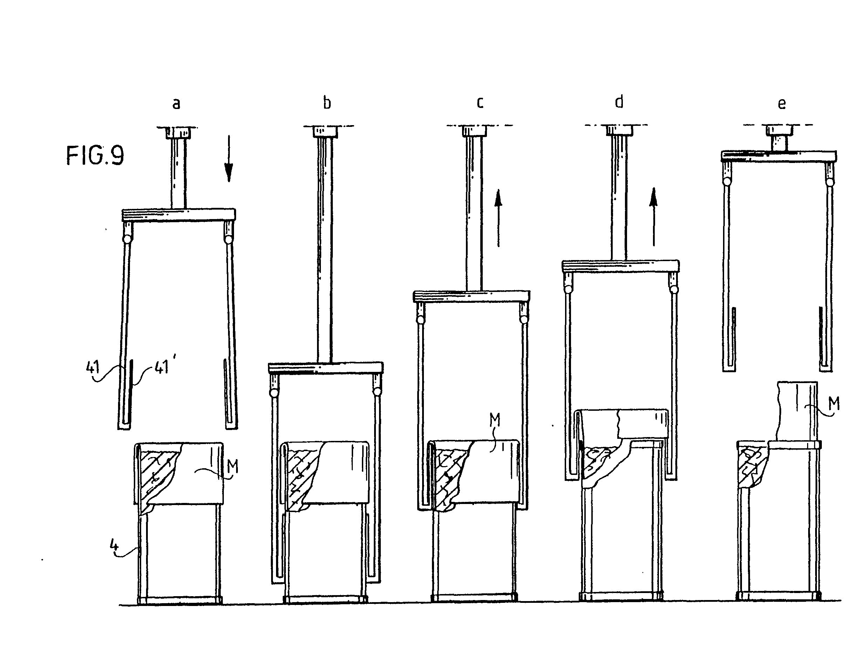

The position of blade 41 in relation to the mould 4 at each of the five stations are indicated in Figures 9a to 9e inclusive.

Thus Figure 9a shows the position in which the filled mould 4 with turned-down collar M is situated beneath the blade 41.

During descent of the blade 41, these move down with an ample margin past the upper edge of mould 4, after which they come to rest close to the bottom of the mould, in contact with its outer wall. During ascent, the hook-like lower ends of blade 41 pass under the turned-down collar M, (see Figure 9c), after which, on further ascent of the levers 41, they pull the collar back into the position according to Figure 9e.

It should be noted here that the length of the hook-like portion 41' is greater than the height of the turned-down collar M, so that the extremity of the hook travels in the top fold of the collar of the foil while the collar is being folded back up. Since the outside of the collar M, during filling, has remained free from fat and other contamination, its inner wall, after it has been folded up again, will equally have remained clean, which is important for the sealing phase which follows.

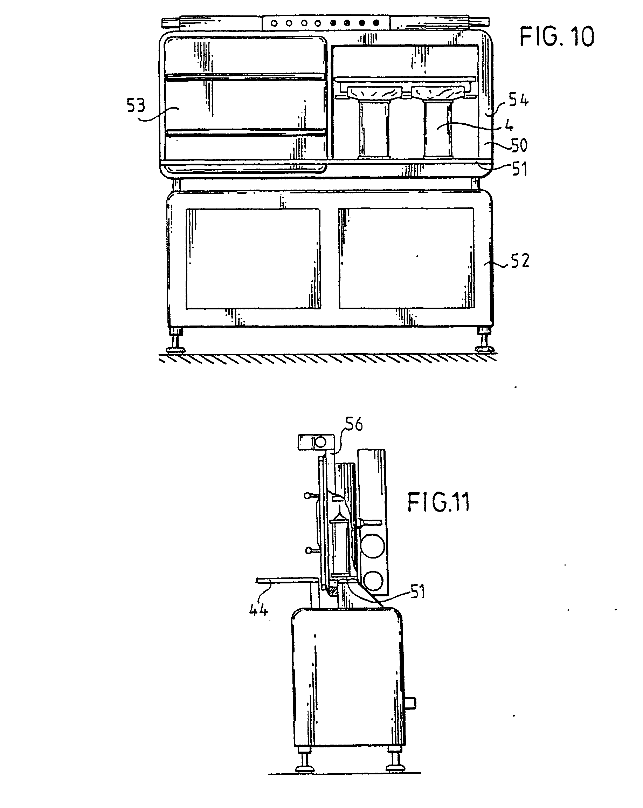

The sealing phase will be further explained by reference to Figures 10 to 14 inclusive.

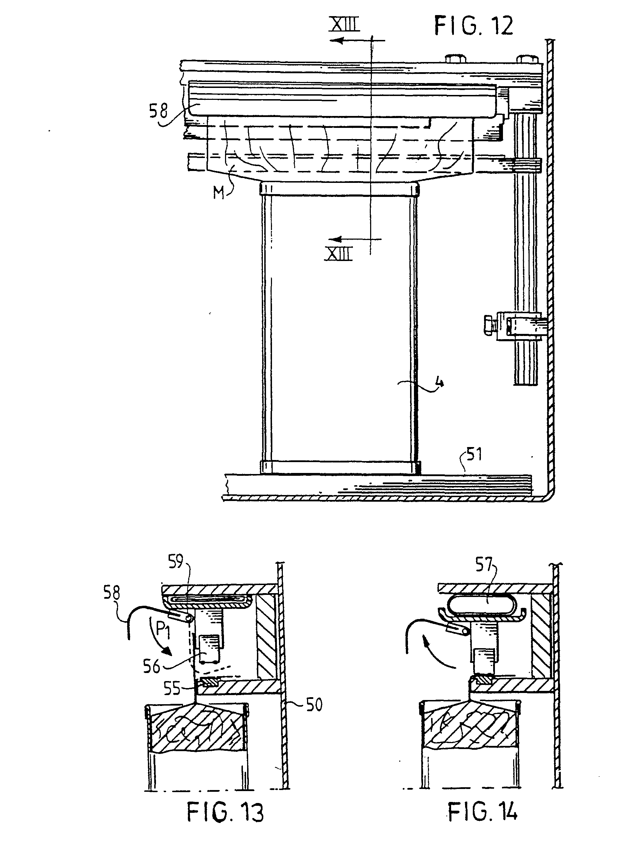

Directly following conveyor belt 44 of Figure 8, there is situated a third supporting organ in the form of a vacuum chest 50. The bottom 51 of the vacuum chest lies at the same level as the conveyor belt 44 (see Figure 11), so that the insertion of a mould 4 can repeatedly take place without interruption. The vacuum chest consists of two adjacent sections, each of which can be separately evacuated. Both sections rest on top of a plinth 52, in which the pump for evacuation is situated. The sections can be closed air-tight by a cover or door 53. To this end, door 53 is provided at its circumference with a flexible sealing strip, which creates a seal against the flat edge 54 of the vacuum section.

The door can be slid along a top rail 56 across the front faces of the vacuum sections, an action which can take place manually or mechanically.

In the vacuum chest there are situated sealing means (see Figures 12 to 14 inclusive), which consist of a horizontally extending table 55, which is securely joined to the rear side of the vacuum chest 50, and of which the height above the bottom 51 is such that it approximately at the level of collar M projecting above mould 4. Collar M is either manually or mechanically folded flat, so that the opposing parts come into contact with each other.

Above supporting table 55 there is situated a heatable pressing punch 56, which is fixed to the lower side of a flexible hose 57. Hose 57 is sealed air-tight, and contains a medium under a definite pressure.

The pressing punch 56 is equipped on the side facing the front with a folding-member 58, which is joined with a hinged connection to the punch at 59. The folding-member consists of a bent plate whose breadth corresponds to that of collar M when folded flat (see Figure 12). The folding member can be turned in the direction of arrow P1 to a position under the pressure punch 56, and back again.

The above described apparatus works as follows:

After mould 4 has been positioned and the collar M has been folded out flat (see Figure 12), the folding member can fold the collar over through an angle of 90° onto the supporting table 55, and smooth it out. Through this folding process, the collar M can no longer pucker, which helps during air-tight sealing.

Then the operator can close the vacuum chest by applying the cover 53 in front of the appropriate section. Consequent to the evacuation of the section, tube 57 will, because of the pressure of the medium, automatically push pressing punch 56 in the direction of pressing table 55, and thus weld the two layers of the collar together. After the sealing operation, the air pressure in the section can be allowed to return, the mould can be taken out, and the contents of the evacuated foil can be processed further, for example by pasteurization or cooking.

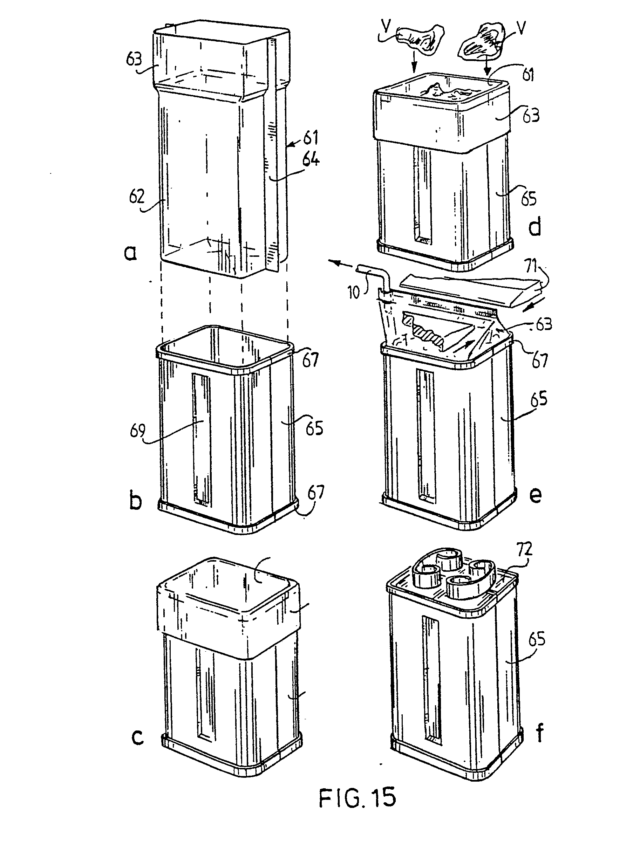

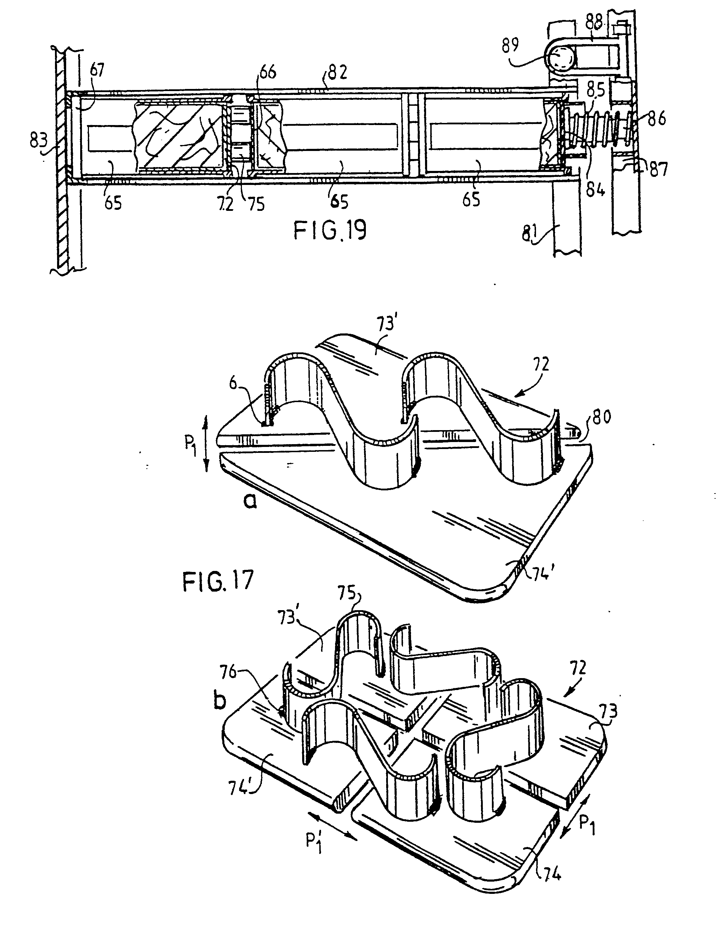

In Figure 15 number 61 indicates a bag-shaped lining, which consists of a lower portion 62 and an extended upper position 63 whereof the inner circumference is greater than that of the lower portion 62, the reason for which will be explained below. This widening of the inner circumference can easily be brought about, starting with a foil material, such as transparent plastic, which is folded shut at the bottom in the usual way, and which is sealed along the side by means of a longitudinal seam, the inner circumference of the bag automatically becomes correspondingly wider.

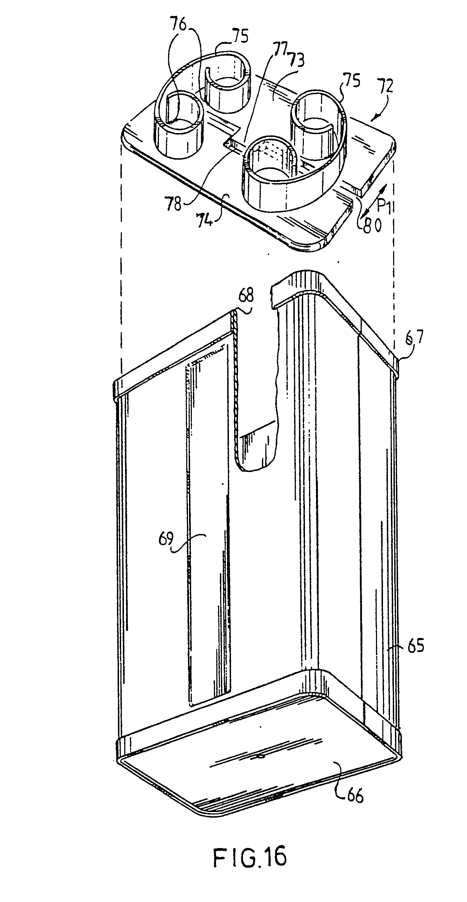

Figure 15b shows the mould according to the invention, which consists of a cylindrical portion 65, with a fixed bottom 66 (see also Figure 16). It should hereby be noted that the cross-section of the cylindrical portion 65 has a principally rectangular shape. The lower and upper edges of cylindrical portion 65 are reinforced by thickenings 67, in the walls, which can be made by, before bending a cylinder from sheet material, a first folding the edges over through 180° (see item 68 in Figure 16). The wide side-wall of the cylindrical portion 67 is strengthened by a recessed portion forming a reinforcement rib 69. Hereby, potential bulging outwards of the side-wall of cylindrical part 65 during pressurization of the contents is avoided.

Figure 15c shows the mould in which lining 61 is fitted, with the extended portion 63 being folded down over the upper edge 67, of the mould. This is possible owing to the larger inner dimensions of the extended portion 63.

Figure 15d shows the situation in which the mould with the lining 61 fitted therein is filled with pieces of meat, V. After sufficient pieces of meat have been put into the mould, edge 63 is folded back again, and then firstly the lining is evacuated at the top by means of a vacuum apparatus 70 and, subsequently, it is sealed airtight by a welding apparatus 71. The projecting sealed part 63 of the lining is folded down in the usual way, for example in the same way as the bottom, after which cover-section 72 is placed in the open end of the mould, according to Figure 15f.

Cover-section 72 consists, in the form shown according to Figure 16, of two members 73 and 74, which are mutually connected by means of spring strips 75, standing perpendicularly thereon, for example by securing the ends of the curved spring strips by welding at 76. One of the members 73, is provided with a lip 77, which fits into a recess 78 of the other cover-member 74. In this construction, a sideways relative movement of members 73 and 74 in the direction of arrow P1 is permissible. In the position during assembly by welding, there is a narrow gap 80 between the members, such that on insertion in mould 65, the members 73 and 74 must be pressed towards one another against the pressure of spring leaves 75. As soon as cover-section 72 has been inserted in cylindrical mould-section 65, after releasing of the lid, spring strips 75 press cover-members 73 and 74 firmly against the inside of the side-walls of mould part 63, so that all clearance between cover-section 72 and the inside of form part 65 is prevented. The strengthened outer edge 67, as well as the reinforcement rib 69, help ensure a correct contact. It should be noted that possibly a smaller clearance 20 remains between members 73 and 74, but this is covered by the folded-up weld seam of the extended part 63 of lining 61, so that on a possible pressing action on cover-section 72 and the contents of mould section 65, a uniform pressure on the contents is ensured.

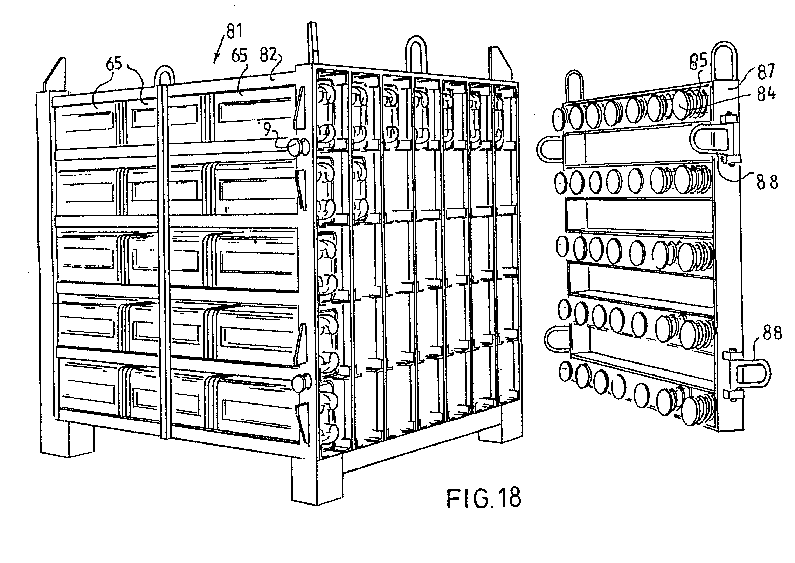

Figures 17a and 17b show alternative embodiments of lid part 72. The gap 80 between elements 73' and 74' is dependent for its direction on the manner of folding the lining 61 in mould 65. Should the welding seam run diagonally then a form of lid corresponding to Figure 17a is advantageous. If the extended part 63 of the lining is folded crossways, then the embodiment of the lid shown in Figure 17b is preferable.

The cover-members 73, 74, in the various embodiments are in each case mutually connected by curved leaf springs 75, which are welded securely by their end parts at 76 to the cover-members. In this way a freedom of movement of members 73, 73', 74 and 74' in the directions of arrows P1 or P1' is made possible.

Figures 18 and 19 show, in perspective, a holder 81, which consists of a framework of longitudinal and transverse profiles, which ensure that guides 82 are made available for a number of adjacently arranged cylindrical mould sections 65. The adjacently situated moulds 65 are so positioned that lid section 72 lies with the spring strips 75 which are mounted thereon against the bottom 66 of the adjacent mould. The filling of the form with meat pieces is such that the spring leaves project beyond the edge 67 of mould 65.

Either the guide 82 or the holder 81 is provided at one end with a fixed end partition 83, against which rests the bottom edge 67 of the first mould. At the opposite end, there is an elastically compliant end partition 84 fitted, which here has the form of a ram. The ram lies against the lid section 72 of the mould on the right in Figure 19, and is elastically supported by a helical spring 85, which travels along a pin 86 of a clamping frame 87. The clamping frame 87 is made with straps 88 which fit around knobs 89 of the frame of the holder 81. The size of the straps 88 and the placing of knobs 89 is such that when clamping frame 87 is fitted on the front of holder 81, the compliant partitions 84 come into spring-loaded contact with the lid sections 72 of the front moulds of each row in a guide 82. By this means, the whole row of moulds is subject to a definite spring pressure, and after closing the entire holder 81 with moulds 65 can be placed in a heating space, for example a steam vessel. Through the supply of heat, the meat expands and becomes pasteurized, whilst the lining 61 shrinks as a result of the heat. Owing to the permanent pressure on the contents of the moulds 65 as the result of springs 85, the contents take on the exact shape of the cylindrical mould section 65, and the lining 61 fits closely around the moulded meat product.

The end product is obtained by removing moulds 65 from the holder, removing cover section 72, and taking out the lining with the shaped meat product in it from the mould.

## Claims

1. Apparatus for packing a meat product, such as ham, in foil, use being made of a can-shaped mould (4) having a wall- and bottom section for accommodating a foil bag (F), such that the collar (M) of the foil bag (F) is protruding from said wall section, characterized by:
an elongate first support member (3) for supporting from within the bag and the mould (4), and a first means (6—21), displaceable in radial and axial relationship to said elongate support member (3) for turning-down the collar (M) of the bag (F) around the top edge of the wall section;
a filling station at which the meat product is placed into the foil bag within the mould;
a second horizontally extending support member (32) for supporting the bottom section of the mould containing the foil bag (F) filled with meat product, and a second means (39—41), displaceable perpendicular to the second support member (32) for turning-up the collar (M) of the bag (F);
a third horizontally extending support member (51) for supporting the bottom section of the mould (4) with the filled foil bag (F), equipped with a sealing appliance (55—59) for sealing the collar (M).

2. Apparatus according to claim 1, characterized in that the means for turning down and, respectively, for returning the collar, are formed by two or more blades (10, 41) which are displaceable along the outer wall of the mould (4).

3. Apparatus according to claims 1 and 2, characterized in that the turning down and the returning blade (10, 41) pivot in a controlled manner on an axis (8, 42) transverse to the displacement direction.

4. Apparatus according to claims 1—3, characterised in that each returning blade (41) is formed as a hook.

5. Apparatus according to claim 4, characterized in that the hook length is equal to at least the collar (M) height of the foil bag (F).

6. Apparatus according to claim 1, characterized in that the second support member is a turntable (32) incorporated in a conveyor track, the returning blades (41) being arranged in groups around the turntable (32).

7. Apparatus according to one of the above claims, characterized in that the mould (4) is polygonal in cross-section, and that the number of turning-down, and also of returning, blades (10, 41) applied is the same as the number of corners.

8. Apparatus according to claim 7, characterized in that the turning-down and the returning blades (10, 41) are so arranged, that they operate at the corners of the mould (4).

9. Apparatus according to claim 1, characterized in that the third support member (51) is part of a vacuum chest (50), closable with a door (53), in which the sealing appliance (55—59) is accommodated.

10. Apparatus according to claim 9, characterized in that the sealing appliance is formed as a horizontally extending table (55) at the height of the collar of the foil bag, and a pressing punch (56) which can be moved up and down, a folding element (58) being fitted in the vacuum chest (50) for holding the collar (M) down over the horizontal table (55).

11. Apparatus according to claims 9 and 10, characterized in that the pressing punch (56) is fixed to an air-tight hose.

12. Apparatus according to claim 10, characterized in that the folding member (58) is a bent hinge-plate, which can be pivoted, parallel to the pressing table (55), around a hinge-pin (59) which is fastened to the pressing punch.

13. A method for preparing meat products such as hams, starting from pieces of meat which have been subjected to necessary prior treatment such as salting, said method comprising the following steps:
—filling an impermeable releasable lining, with pieces of meat (V);
—evacuating and air-tight sealing of the lining;
—heating the meat for a predetermined length of time, with simultaneous exertion of a pressure on the closed lining in the mould;
—taking the meat product, ready and packed in the air-tight lining, out of the mould, characterized in that:
—prior to the filling of the lining said lining is placed in a mould,
—and the collar section of the lining protruding said mould is turned over the edge of the mould,
—and finally said collar section is turned back before the sealing step.

## Patentansprüche

1. Apparat zum Verpacken eines Fleischproduktes, wie Schinken, in Folie, wobei eine büchsenförmige Form (4) verwendet wird, die einen Wandteil und einen Bodenteil zur Aufnahme eines Folienbeutels (F) aufweist, so daß der Kragen (M) des Folienbeutels (F) über den Wandteil hinausragt, gekennzeichnet durch: ein längliches erstes Stützteil (3), um den Beutel und die Form (4) von innen her zu stützen, und eine erste Einrichtung (6—21), die relativ zu dem länglichen Stützteil (3) radial und axial verlagerbar ist, um den Kragen (M) des Beutels (F) um die Oberkante des Wandteils herunterzuziehen; eine Abfüllstation, in welcher das Fleischprodukt in den Folienbeutel innerhalb der Form eingebracht wird; ein zweites horizontales Stützteil (32) zum Abstützen des Bodenteils der Form, die den mit dem Fleischprodukt gefüllten Folienbeutel (F) enthält, und eine zweite Einrichtung (39—41), die zum Aufrichten des Kragens (M) des Beutels (F) zu dem zweiten Stützteil (32) senkrecht verschiebbar ist; ein drittes horizontales Stützteil (51) zum Abstützen des Bodenteils der Form (4) mit dem gefüllten Folienbeutel (F), versehen mit einer Verschließvorrichtung (55—59) zum dichten Verschließen des Kragens (M).

2. Apparat gemäß Anspruch 1, dadurch gekennzeichnet, daß die Einrichtungen zum Herunterziehen bzw. zum Aufrichten des Kragens von zwei oder mehr Flügeln (10, 41) gebildet wird, welche entlang der Außenwand der Form (4) verlagerbar sind.

3. Apparat gemäß den Ansprüchen 1 und 2, dadurch gekennzeichnet, daß der Flügel (10, 41) zum Herunterziehen und Wiederaufrichten gesteuert um eine Achse (8, 42) schwenkt, die quer zur Verlagerungsrichtung verläuft.

4. Apparat gemäß den Ansprüchen 1 bis 3, dadurch gekennzeichnet, daß jeder Aufrichtflügel (41) als Haken ausgebildet ist.

5. Apparat gemäß Anspruch 4, dadurch gekennzeichnet, daß die Hakenlänge mindestens gleich der Höhe des Kragens (M) des Folienbeutels (F) ist.

6. Apparat gemäß Anspruch 1, dadurch gekennzeichnet, daß das zweite Stützteil ein Drehtisch (32) ist, der in eine Förderbahn eingebaut ist, wobei die Aufrichtflügel (41) in Gruppen rings des Drehtisches (32) angeordnet sind.

7. Apparat gemäß einem der vorangehenden Ansprüche, dadurch gekennzeichnet, daß die Form (4) im Querschnitt polygonal ist und daß die Anzahl der Flügel (10, 41) zum Herunterziehen und derjenigen zum Aufrichten dieselbe ist wie die Anzahl der Ecken.

8. Apparat gemäß Anspruch 7, dadurch gekennzeichnet, daß die Flügel (10, 41) zum Herunterziehen und Aufrichten so angeordnet sind, daß sie an den Ecken der Form (4) arbeiten.

9. Apparat gemäß Anspruch 1, dadurch gekennzeichnet, daß das dritte Stützteil (51) Teil einer mit einer Tür (53) verschließbaren Vakuumkammer (50) ist, in welcher die Verschließeinrichtung (55—59) aufgenommen ist.

10. Apparat gemäß Anspruch 9, dadurch gekennzeichnet, daß die Verschließeinrichtung als sich horizontal erstreckender Tisch (55) in der Höhe des Kragens des Folienbeutels und als Preßstempel (56) ausgebildet ist, der auf- und nieder bewegt werden kann, wobei ein Faltelement (58) in der Vakuumkammer (50) angebracht ist, um den Kragen (M) über den horizontalen Tisch (55) hin niederzuhalten.

11. Apparat gemäß den Ansprüchen 9 und 10, dadurch gekennzeichnet, daß der Preßstempel (56) an einem luftdichten Schlauch befestigt ist.

12. Apparat gemäß Anspruch 10, dadurch gekennzeichnet, daß das Faltelement (58) eine bogenförmige Schwenkplatte ist, die parallel zu dem Preßtisch (55) um einen Schwenkbolzen (59) geschwenkt werden kann, der am Preßstempel befestigt ist.

13. Verfahren zur Herstellung von Fleischprodukten, wie Schinken, bei dem mit Fleischstücken begonnen wird, die einer notwendigen Vorbehandlung, wie dem Einsalzen, unterworfen werden, wobei das Verfahren die folgenden Schritte enthält:
—Füllen eines undurchlässigen Behältnisses, das geöffnet werden kann, mit Fleischstücken (V);
—Evakuieren und luftdichtes Verschließen des Behältnisses;
—Erwärmen des Fleisches während einer festgesetzten Zeitdauer, wobei gleichzeitig Druck auf das geschlossene Behältnis in der Form ausgeübt wird;
—Herausnehmen des Fleischproduktes aus der Form, das fertig ist und in dem Behältnis luftdicht verpackt ist, dadurch gekennzeichnet:
—daß vor dem Füllen des Behältnisses das Behältnis in eine Form gesetzt wird,
—und daß der Kragenteil des Behältnisses, der über die Form hinausragt, über die Kante der Form gezogen wird,
—und daß schließlich der Kragenteil vor dem Verschließen zurückgezogen wird.

**Revendications**

1. Appareil pour l'emballage sous feuille d'un produit du type viande, tel que jambon, opéré en utilisant un moule en forme de boîte (4) présentant des sections de paroi et de base destinées à recevoir un sac en feuille (F) en sorte que le col (M) du sac en feuille (F) dépasse de ladite section de paroi, caractérisé par:
—un premier organe de support oblong (3) destiné à supporter à partir de l'intérieur le sac et le moule (4), et un premier moyen (6—21) déplaçable radialement et axialement par rapport audit organe de support oblong (3) pour rabattre vers le bas le col (M) du sac (F) autour du bord supérieur de la section de paroi;
—un poste de remplissage auquel le produit du type viande est placé dans le sac en feuille à l'intérieur du moule;
—un second organe de support (32) s'étendant horizontalement pour supporter la section de base du moule contenant le sac en feuille (F) rempli de produit du type viande, et un second moyen (39—41) déplaçable perpendiculairement au second organe de support (32) pour redresser vers le haut le col (M) du sac (F);
—un troisième organe de support (51) s'étendant horizontalement pour supporter la section de base du moule (4) garni du sac en feuille (F), muni d'un dispositif de soudage (55—59) pour le soudage du col (M).

2. Appareil selon la revendication 1, caractérisé en ce que les moyens assurant respectivement le rabattement et le redressement du col sont constitués par deux ou plusieurs lames (10, 41) déplaçables le long de la paroi extérieure du moule (4).

3. Appareil selon les revendications 1 ou 2, caractérisé en ce que les lames de rabattement et de redressement (10, 41) pivotent de manière contrôlée autour d'un axe (8, 42) transversal à la direction de déplacement.

4. Appareil selon l'une des revendications 1 à 3, caractérisé en ce que chaque lame de redressement (41) est en forme de crochet.

5. Appareil selon la revendication 4, caractérisé en ce que la longueur du crochet est au moins égale à la hauteur du col (M) du sac en feuille (F).

6. Appareil selon la revendication 1, caractérisé en ce que le second organe de support est une table tournante (32) incorporée à une piste de transporteur, les lames de redressement (41) étant disposées par groupes autour de la tables tournante (32).

7. Appareil selon l'une des revendications précédentes, caractérisé en ce que le moule (4) est polygonal en coupe droite, et en ce que le nombre de lames de rabattement ainsi que de redressement (10, 41) utilisées est égal au nombre d'arêtes.

8. Appareil selon la revendication 7, caractérisé en ce que les lames de rabattement et de redressement (10, 41) sont disposées en sorte d'agir au niveau des arêtes du moule (4).

9. Appareil selon la revendication 1, caractérisé en ce que le troisième organe de support (51) fait partie d'un coffre à vide (50), pouvant être fermé par une porte (53), dans lequel est logé le dispositif de soudage (55—59).

10. Appareil selon la revendication 9, caractérisé en ce que le dispositif de soudage est réalisé sous forme de table (55), s'étendant horizontalement à la hauteur du col du sac en feuille, et d'un poinçon presseur (56) pouvant monter et descendre, un élément de pliage (58) étant monté dans le coffre à vide (50) pour maintenir le col (M) sur la table horizontale (55).

11. Appareil selon les revendications 9 ou 10, caractérisé en ce que le poinçon presseur (56) est fixé à un tuyau souple étanche à l'air.

12. Appareil selon la revendication 10, caractérisé en ce que l'élément de pliage (58) est une plaque articulée coudée qui peut pivoter, parallèlement à la table presseuse (55), autour d'un tourillon (59) qui est fixé au poinçon presseur.

13. Procédé de préparation de produits du type viande tels que jambon, à partir de morceaux de viande ayant subi un traitement antérieur nécessaire tel que salage, ledit procédé comprenant les opérations suivantes;
— on remplit une doublure détachable imperméable de morceaux de viande (V);
— on évacue la doublure et on la rend étanche à l'air;
— on chauffe la viande pendant un laps de temps déterminé, en exerçant simultanément une pression sur la doublure fermée présente dans le moule;
— on démoule le produit du type viande, prêt et emballé dans la doublure étanche à l'air, caractérisé en ce que:
— avant de remplir la doublure on la place dans un moule,
— et l'on rabat la section de col de la doublure dépassant dudit moule autour du bord du moule,
— et enfin en redresse ladite section de col avant l'opération d'étanchement.

FIG. 2

FIG. 3

FIG. 4

FIG.1

FIG.5

a

b

c

d

e

FIG. 6

FIG. 7

FIG. 8

FIG.9

a    b    c    d    e

41  41'

M

4

M

M

M

EP 0 187 414 B1

FIG. 10

FIG.11

FIG. 12

58

M

4

51

XIII

XIII

59

58

P1

56

55

50

FIG. 13

57

FIG. 14

FIG.15

FIG.19

FIG.17

FIG.16

FIG.18

EP 0 187 414 B1